# EUROPÄISCHE PATENTANMELDUNG

(11) **EP 2 497 757 A1**
(43) Veröffentlichungstag der Anmeldung: **12.09.2012**
(21) Anmeldenummer: 11157796.1
(22) Anmeldetag: 11.03.2011
(51) Int. Cl.: C04B 28/02, C04B 28/14, C04B 40/00

(54) **Abbindeverzögerer für hydratbildende Bindemittel**

(71) Anmelder: Sika Technology AG, 6340 Baar (CH)
(72) Erfinder: Hampel, Christina, 8102 Oberengstringen (CH); Zimmermann, Jörg, 8046 Zürich (CH)
(74) Vertreter: Sika Patent Attorneys

(57) **Zusammenfassung**

Verfahren zur Herstellung eines Abbindeverzögerers für hydratbildende Bindemittel, wobei
a) ein erster Reaktand A, umfassend eine Aminosäuren und/oder ein Aminosäurederivat, mit
b) einem zweiten Reaktanden C, umfassend eine Aminfreie Carbonsäure und/oder ein Aminfreies Carbonsäurederivat, zu einem Reaktionsprodukt umgesetzt wird, dadurch gekennzeichnet, dass die Umsetzung bei einem pH-Wert von 7.5 - 1 1 .5 erfolgt und der pH-Wert während der Umsetzung konstant im angegebenen Bereich 7.5 - 11.5 gehalten wird.
Um den pH-Wert konstant im angegebenen Bereich zu halten und Fluktuationen zu vermeiden, werden in einem Verfahrensschritt eine wässrige Lösung von Reaktand A vorgelegt und durch Zugabe von Base ein pH von 7.5 - 1 1 .5, bevorzugt 8 - 1 1, insbesondere 8.5 - 1 0.5, eingestellt. In einem zweiten Verfahrensschritt werden alternierend Teilmengen der Base und Teilmengen des Reaktanden C zugegeben um den pH-Wert während der Umsetzung zu stabilisieren.

## Beschreibung

### Technisches Gebiet

Die Erfindung betrifft ein Verfahren zu Herstellung eines Abbindeverzögerers für hydratbildende Bindemittel sowie einen entsprechenden Abbindeverzögerer. Des Weiteren bezieht sich die Erfindung auf eine Bindemittelzusammensetzung enthaltend einen Abbindeverzögerer und ein Verfahren zu deren Herstellung. Ein weiterer Aspekt der Erfindung beinhaltet die Verwendung des Abbindeverzögerers zur Verzögerung des Abbindebeginns von hydratbildenen Bindemitteln.

### Stand der Technik

In der Bauindustrie werden grosse Mengen an hydratbildenden Bindemitteln, wie z.B. Zement, Kalk oder Gipsmassen, eingesetzt.

Bei Gipsmassen werden gebrannter Gips oder Stuckgips entweder alleine oder in Mischung mit Kalk, Sand und Leichtzuschlagstoffen, verwendet. Die Abbindezeit dieser Gipsmassen nach dem Anrühren mit Wasser ist jedoch vergleichsweise kurz, so dass ohne zusätzliche Massnahmen eine sehr schnelle Verarbeitung erfolgen muss. Es ist jedoch bekannt, den Versteifungsbeginn von Gipsmassen durch Beimischung von Abbindeverzögerern hinaus zu schieben, um eine bessere Verarbeitbarkeit zu ermöglichen. Bekannte Abbindeverzögerer sind z.B. Fruchtsäuren, wie Wein- oder Zitronensäure, aber auch Eiweisshydrolysate, wie z.B. das kommerziell erhältliche Plast Retard L (erhältlich bei Sicit 2000 S.p.A).

In diesem Zusammenhang beschreibt die EP 2 108 628 A1 (Tricosal GmbH) beispielsweise einen Abbindeverzögerer in Form eines Addukts auf der Basis einer Aminosäureverbindung und einer Carbonsäure bzw. einem Carbonsäurederivat. Die Herstellung dieses Addukts erfolgt durch Umsetzung einer Aminosäureverbindung mit einer Carbonsäure bzw. einem Carbonsäurederivat in wässriger Lösung.

Obschon bekannte Abbindeverzögerer durchaus wirksam sind, besteht nach wie vor Bedarf nach einem verbesserten Abbindeverzögerer, welcher insbesondere den Versteifungsbeginn nach dem Anrühren mit Wasser noch weiter hinaus zögert.

### Darstellung der Erfindung

Aufgabe der vorliegenden Erfindung ist es daher, einen verbesserten Abbindeverzögerer und ein Verfahren zu dessen Herstellung zu schaffen. Insbesondere soll der erfindungsgemäss herstellbare Abbindeverzögerer den Versteifungsbeginn von hydratbildenden Bindemitteln, im Besonderen Gips, möglichst lange hinaus zögern. Das Verfahren soll des Weiteren eine möglichst zuverlässige, gut reproduzierbare und sichere Herstellung eines verbesserten Abbindeverzögerers ermöglichen.

Die Aufgabe im Hinblick auf Verfahren wird erfindungsgemäss durch die Merkmale des Anspruchs 1 gelöst. Die Aufgabe bezüglich des Abbindeverzögerers wird durch die Merkmale des Anspruchs 12 gelöst.

Der Kern des erfindungsgemässen Verfahrens liegt darin, dass die Umsetzung der beiden Reaktanden **A** und **C** bei einem pH-Wert von 7.5 - 11.5, bevorzugt 8 - 11, insbesondere 8.5 - 10.5, erfolgt. Damit ist insbesondere gemeint, dass der pH-Wert während der Umsetzung im angegebenen Bereich konstant gehalten wird. Dies insbesondere während der gesamten Dauer der Umsetzung der beiden Reaktanden **A** und **C.** Wie sich überraschenderweise gezeigt hat, vermögen derart hergestellte Abbindeverzögerer den Versteifungsbeginn von hydratbildenden Bindemitteln, insbesondere Gips, im Vergleich mit Abbindeverzögerern, welche nach bekannten Verfahren hergestellt werden, signifikant zu verlängern. Dies trifft insbesondere für Abbindeverzögerer in Form von Diprodukten, insbesondere Diamiden, zu. Das erfindungsgemässe Verfahren hat sich zudem als äusserst zuverlässig und gut handhabbar erwiesen. Durch das erfindungsgemässe Verfahren wird insbesondere eine reproduzierbare Herstellung von Abbindeverzögerern mit verbesserter Wirksamkeit ermöglicht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der Erfindung betrifft ein Verfahren, insbesondere zur Herstellung eines Abbindeverzögerers für hydratbildende Bindemittel, wobei
a) ein erster Reaktand **A**, umfassend eine Aminosäure und/oder ein Aminosäurederivat, mit
b) einem zweiten Reaktanden C, umfassend eine Aminfreie Carbonsäure und/oder ein Aminfreies Carbonsäurederivat,
zu einem Reaktionsprodukt umgesetzt wird, wobei die Umsetzung bei einem pH-Wert von 7.5 - 11.5, bevorzugt 8-11, insbesondere 8.5 - 10.5, erfolgt.

Der Ausdruck "hydratbildenes Bindemittel" steht im vorliegenden Zusammenhang insbesondere für Bindemittel, welche in Anwesenheit von Wasser in einer Hydratationsreaktion zu festen Hydraten oder Hydratphasen reagieren. Dies können beispielsweise hydraulische Bindemittel (z.B. Zement oder hydraulischer Kalk), latent hydraulische Bindemittel (z.B. Schlacke oder Flugasche) oder nicht hydraulische Bindemittel (Gips oder Weisskalk) sein.

Bevorzugt umfasst das hydratbildende Bindemittel Gips oder besteht daraus. Zum Term "Gips" wird in diesem Zusammenhang jede bekannte Form von Gips gezählt, insbesondere Calciumsulfat-α-Halbhydrat, Calciumsulfat-β-Halbhydrat, Calciumsulfat-Anhydrit und/oder Mischungen davon. Im vorliegenden Zusammenhang als besonders vorteilhaft hat sich dabei Calciumsulfat-β-Halbhydrat erwiesen.

Das Bindemittel kann auch eine Mischung aus einem oder mehreren hydratbildenden Bindemitteln mit Zuschlagstoffen wie Sand, Kies und/oder Gesteinskörnungen sein.

Der Begriff "Umsetzung" bezeichnet vorliegend insbesondere eine chemische Reaktion der beiden Reaktanden **A** und **C** unter Ausbildung einer chemischen Bindung, bevorzugt einer kovalenten chemischen Bindung, zwischen den Reaktanden **A** und **C.**

Reaktand **A** umfasst eine Aminosäure und/oder ein Aminosäurederivat. Dies kann dabei beispielsweise ein Proteinhydrolysat, eine reine Aminosäure, ein Aminosäuregemisch und/oder deren Hydrochloride beinhalten. Ebenso kann Reaktand **A** eine Mischung einer Aminosäure und/oder eines Aminosäurederivats mit weiteren Verbindungen sein. Mit Vorteil besteht Reaktand **A** aus einer Aminosäure.

Unter dem Begriff "Aminosäure" wird im vorliegenden Zusammenhang insbesondere eine Verbindung mit mindestens einer Carboxygruppe (-COOH) und wenigstens einer Amingruppe (-NH₂) verstanden, welche insbesondere als zwitterionisches Ammoniumcarboxylat vorliegen. Besonders geeignet sind α-Aminosäuren mit einer endständigen Carboxygruppe und in direkter Nachbarschaft eine vicinale oder α-ständige Amingruppe. Die Carboxygruppe kann dabei beispielsweise deprotoniert vorliegen und gegebenenfalls über angelagerte Gegenionen, wie z.B. Metallkationen, verfügen. Ebenso kann die Amingruppe in protonierter Form vorliegen.

Gemäss einer bevorzugten Ausführungsform verfügt die Aminosäure über genau eine Carboxygruppe und über genau zwei Amingruppen. Diese können wie oben erwähnt in protonierter und/oder deprotonierter Form vorliegen. Dadurch können in effektiver Weise Diprodukte mit den Reaktanden **C** hergestellt werden, welche sich als besonders wirksame Abbindeverzögerer herausgestellt haben.

Die Aminosäure ist insbesondere ausgewählt aus der Gruppe bestehend aus Alanin, Arginin, Asparagin, Asparaginsaure, Cystein, Glutamin, Glutaminsaure, Glycin, Histidin, Isoleucin, Leucin, Lysin, Lysinhydrochlorid, Methionin, Phenylalanin, Prolin, Serin, Threonin, Tryptophan, Tyrosin, Valin und/oder Aminobutansäure.

In einer besonders bevorzugten Ausführungsform ist die Aminosäure Lysin und/oder Threonin. Speziell bevorzugt ist Lysin. Mit solchen Aminosäuren, insbesondere mit Lysin, treten die erfindungsgemässen Vorteile besonders gut in Erscheinung.

Reaktand **C** umfasst eine Aminfreie Carbonsäure und/oder ein Aminfreies Carbonsäurederivat. Der Term "Carbonsäure" steht im Rahmen dieser Erfindung insbesondere für eine Mono-, Di- oder Polycarbonsäure. Eine Monocarbonsäure umfasst in diesem Zusammenhang genau eine Carboxygruppe, während die Dicarbonsäure genau deren zwei aufweist und die Polycarbonsäure wenigstens drei Carboxygruppen beinhaltet. Die Carboxygruppe kann dabei beispielsweise deprotoniert vorliegen und gegebenenfalls über angelagerte Gegenionen, wie z.B. Metallkationen, verfügen.

Die Carbonsäure ist vorliegend eine Aminfreie Carbonsäure. Dies bedeutet mit anderen Worten, dass die Carbonsäure nicht von einer Aminosäure abgeleitet ist und/oder keine Amingruppe aufweist. Entsprechend weist auch das Amifreie Carbonsäurederivat keine Amingruppe auf.

Besonders bevorzugt werden aminfreie Dicarbonsäuren und/oder deren Derivate, insbesondere innere Säureanhydride von Dicarbonsäuren, verwendet. Bei entsprechender Umsetzung mit einem Reaktanden **A**, z.B. einer Aminosäure wie Lysin, kann so in einfacher Art und Weise ein Reaktionsprodukt erhalten werden, welches über freie Carboxygruppen verfügt, was sich im vorliegenden Zusammenhang als vorteilhaft erwiesen hat.

Reaktand **C** kann beispielsweise eine reine aminfreie Carbonsäure und/oder ein reines aminfreies Carbonsäurenderivat sein. Auch möglich sind Mischungen von verschiedenen aminfreien Carbonsäuren und/oder aminfreien Carbonsäurenderivaten. Reaktand **C** kann auch als Mischung mit anderen Verbindungen vorliegen. Bevorzugt wir als Verbindung **C** jedoch eine aminfreie Carbonsäure und/oder ein aminfreies Carbonsäurenderivat verwendet.

Ein aminfreies Carbonsäurederivat ist bevorzugt ausgewählt aus der Gruppe bestehend aus Carbonsäureanhydriden, Carbonsäurehalogeniden und/oder Carbonsäureestern.

Insbesondere ist die aminfreie Carbonsäure und/oder das aminfreie Carbonsäurederivat ausgewählt aus der Gruppe Oxalsäure, Essigsäure, Proprionsäure, 1,3-Propriondisäure, Butansäure, Bernsteinsäure, Maleinsäure, Fumarsäure, Phthalsäure, Pyromellitsäure, Apfelsäure, Weinsäure, Zitronensäure und/oder deren Säurehalogenide, Säureanhydride und/oder Ester der genannten Verbindungen.

Wie sich gezeigt hat, umfasst Reaktand **C** vorteilhafterweise ein aminfreies Carbonsäurederivat, insbesondere ein aminfreies Carbonsäureanhydrid. Ganz besonders bevorzugt ist das Carbonsäureanhydrid Bernsteinsäureanhydrid. Insbesondere in Kombination mit Aminosäuren mit zwei Amingruppen, z.B. Lysin, können so besonders wirksame Abbindeverzögerer in hoher Ausbeute und Reinheit hergestellt werden.

Die Reaktanden **A** und **C** werden insbesondere zu einem Amid, bevorzugt einem Diamid, umgesetzt. Besonders bevorzugt werden die Reaktanden **A** und C zu einem Diprodukt umgesetzt, wobei insbesondere pro 1 mol Reaktand **A,** also z.B. Lysin, 1.5 - 3 mol Reaktand **C**, z.B. Bernsteinsäureanhydrid, umgesetzt werden. Weiter bevorzugt werden pro 1 mol Reaktand **A** 1.8 - 2.5 mol, besonders bevorzugt 2.0 mol Reaktand **C** umgesetzt.

Wie sich gezeigt hat, erfolgt die Umsetzung mit Vorteil bei einer Temperatur von 20 - 60°C, bevorzugt 35 - 55 °C, besonders bevorzugt 40 - 50°C. In derartigen Temperaturbereichen werden im erfindungsgemässen pH-Bereich besonders hohe Ausbeuten an wohldefinierten Reaktionsprodukten erzielt.

Die Umsetzung erfolgt insbesondere in wässriger Lösung.

Dem Reaktionsgemisch wird insbesondere mindestens eine Base zugegeben. Geeignete Basen sind beispielsweise Alkalihydroxide, Erdalkalihydroxide und/oder Erdalkalioxide. Die wenigstens eine Base umfasst mit Vorteil NaOH, KOH, Ca(OH)₂, und/oder CaO und wird insbesondere in Form einer wässrigen Lösung zugegeben. Derartige Basen haben sich im vorliegenden Zusammenhang als besonders geeignet erwiesen. Geeignete Konzentrationen der wässrigen Lösungen betragen z.B. 40 - 60 Gew.-% Base in Wasser. Es sind grundsätzlich aber auch andere Basen verwendbar. Die Reaktionsführung wird dabei aber unter Umständen erschwert.

Gemäss einer bevorzugten Ausführungsform umfasst oder besteht die Base aus NaOH und/oder KOH. Bevorzugt ist NaOH. Damit lassen sich in effektiver Weise flüssige Abbindeverzögerer herstellen.

In einer anderen bevorzugten Ausführungsform umfasst oder besteht die Base aus CaO und/oder Ca(OH)₂. Optional können auch Mischungen aus CaO und/oder Ca(OH)₂ mit NaOH und/oder KOH eingesetzt werden. Wie sich gezeigt hat kann bei dieser Variante durch Trocknung des Abbindeverzögerers nach erfolgter Umsetzung, z.B. durch Sprühtrocknung, ein festes, insbesondere pulverförmiges, Produkt erhalten werden.

Je nach Lagerbedingungen und Verwendung des Abbindeverzögerers kann entweder ein Abbindeverzögerer in flüssiger Form oder ein Abbindeverzögerer in fester oder pulverförmiger Form vorteilhaft sein.

Gemäss einer besonders vorteilhaften Ausführungsform wird in einem ersten Verfahrensschritt eine wässrige Lösung von Reaktand **A** vorgelegt und durch Zugabe von Base ein pH von 7.5 - 11.5, insbesondere 8 - 11, besonders bevorzugt 8.5 - 10.5, eingestellt.

Von Vorteil werden in einem weiteren Verfahrensschritt alternierend Teilmengen der Base und Teilmengen des Reaktanden C zugegeben. Die Teilmengen werden dabei insbesondere so bemessen, dass der pH-Wert der Reaktionslösung während der Umsetzung im Bereich von 7.5 - 11.5, insbesondere 8 - 11, besonders bevorzugt 8.5 - 10.5, bleibt. Dadurch können pH-Wert Fluktuationen bestmöglich ausgeglichen werden, was die Ausbeute der Umsetzung verbessert und im Endeffekt die Wirkung des Abbindeverzögerers erhöht.

Die so erhaltene wässrige Lösung des Abbindeverzögerers kann nach Abschluss der Umsetzung unmittelbar zum Einsatz gebracht werden. Eine Aufarbeitung der Reaktionslösung nach der Herstellung des Abbindeverzögerers ist nicht erforderlich.

Optional kann der so hergestellte und flüssige Abbindeverzögerer einem weiteren Verfahrensschritt einem Trocknungsprozess, bevorzugt einem Sprühtrocknungsprozess, unterzogen werden. Dies erfolgt insbesondere falls die Umsetzung unter Verwendung eines oder mehrerer Erdalkalihydroxide und/oder Erdalkalioxide, z.B. CaO und/oder Ca(OH)₂, als Base erfolgt ist. Dadurch kann der Abbindeverzögerer in effektiver Weise in ein pastöses oder festes, insbesondere ein pulverförmiges, Produkt überführt werden.

Geeignete Trocknungsverfahren sind dem Fachmann an sich bekannt. Bei der in diesem Zusammenhang besonders vorteilhaften Sprühtrocknung wird das zu trocknende Gut üblicherweise mittels einer Düse oder rotierenden Zerstäuberscheiben in einen Heissluftstrom eingebracht, wo es zu einem feinen Pulver trocknet und beispielsweise über einen Zyklonabscheider abgetrennt und entnommen werden kann.

Bei Durchführung einer Sprühtrocknung kann es vorteilhaft sein, wenn vor und/oder während der Sprühtrocknung mindestens ein Sprühhilfsstoff, bevorzugt ausgewählt aus der Gruppe bestehend aus Kalksteinmehl, Ligninsulfonat, Talkum, Kieselsaure, Polyacrylaten und/oder Polyvinylalkoholen, zugesetzt wird.

Ein weiterer Aspekt der Erfindung betrifft ein Verfahren zur Herstellung einer hydratbildenen Bindemittelzusammensetzung, wobei ein Abbindeverzögerer wie vorstehen beschreiben hergestellt und mit einem hydratbildenden Bindemittel, insbesondere Gips, vermischt wird.

Bezogen auf 100 Gew.-% des hydratbildenden Bindemittels in trockener Form werden mit Vorteil 0.001 - 0.5 Gew.-%, bevorzugt 0.001 - 0.1 Gew.-% des Abbindeverzögerers zugesetzt.

Weiter bezieht sich die Erfindung auf einen Abbindeverzögerer, insbesondere für hydratbildene Bindemittel, welcher erhältlich ist durch das vorstehend beschriebene Verfahren. Derartige Abbindeverzögerer haben sich, im Vergleich mit Abbindeverzögerern welche nach bekannten Verfahren hergestellt werden, als besonders wirksam erwiesen. Wie sich gezeigt hat, lassen sich die beiden Reaktanden **A** und **C** bei geeigneter Reaktionsführung in hoher Ausbeute umsetzen. Dadurch kann der Anteil an unwirksamen oder die Verzögerungswirkung reduzierenden Nebenprodukten im Abbindeverögerer (z.B. nicht umgesetzte Reaktanden **A** und **C)** äusserst gering gehalten werden. Bezogen auf die Gesamtmolmenge des Abbindeverzögerers besteht der Abbindeverzögerer mit Vorteil zu wenigstens 90 Mol.-%, bevorzugt wenigstens 95 Mol.-%, besonders bevorzugt wenigstens 98 Mol.-% aus dem Reaktionsprodukt der beiden Reaktanden **A** und **C**

Dabei handelt es sich beim Reaktionsprodukt besonders bevorzugt um ein Diprodukt, gebildet aus zwei Molanteilen Reaktand **C** mit einem Molanteil Reaktand **A.** Das Diprodukt ist insbesondere ein Diamid, gebildet aus zwei Molanteilen Bernsteinsäureanhydrid mit einem Molanteil Lysin. Aufgrund der erfindungsgemässen Reaktionsführung lässt sich dabei das Diprodukt bzw. Diamid in hoher Ausbeute gewinnen, wodurch der Anteil an unreagierten Reaktanden **A, C** und/oder Monoprodukten (z.B. bestehend aus einem Molanteil Lysin und einem Molanteil Bernsteinsäureanhydrid) im Abbindeverzögerer äusserst gering ausfällt. Überraschenderweise kann dadurch die Verzögerungswirkung des erfindungsgemässen Abbindeverzögerers stark verbessert werden.

Ein pH-Wert des Abbindeverzögerers liegt mit Vorteil im Bereich von 7 - 11, insbesondere 8 - 9. Damit wird eine optimale Verzögerungswirkung in hydratbildenden Bindemittlen, insbesondere Gips, erreicht.

Falls erwünscht, können dem Abbindeverzögerer ein oder mehrere Zusatzstoffe aus der Reihe von Rheologiehilfsmitteln, Lösemittel, Entschäumern, Beschleunigern, Füllstoffen, Trockenstoffen, Farbstoffen, Konservierungsmitteln, Rostschutzmitteln, Hydrophobierungsmitteln und/oder Pigmenten zugegeben werden.

Besonders vorteilhaft wird dem Abbindeverzögerer ein Konservierungsmittel zugegeben. Dadurch lässt sich die Lagerstabilität signifikant verbessern.

In einer bevorzugten Ausführungsform liegt der Abbindeverzögerer in flüssiger Form vor. Gemäss einer anderen vorteilhaften Ausführungsform besteht der Abbindeverzögerer aus einem pastösen oder festen Produkt, insbesondere einem Pulver.

Ein weiterer Aspekt der Erfindung betrifft eine Bindemittelzusammensetzung enthaltend einen erfindungsgemässen Abbindeverzögerer und ein hydratbildendes Bindemittel, insbesondere Gips. Bezogen auf 100 Gew.-% des hydratbildenden Bindemittels in trockener Form enthält die Bindemittelzusammensetzung mit Vorteil 0.001 - 0.5 Gew.-%, bevorzugt 0.001 - 0.1 Gew.-% des Abbindeverzögerers. Aufgrund des erfindungsgemäss hergestellten Abbindeverzögerers lassen sich derartige Bindemittelzusammensetzungen nach Vermischung mit Wasser unerwartet lange Verarbeiten bevor das Abbinden des Bindemittels einsetzt.

Dabei ist es auch möglich, der Bindemittelzusammensetzung die vorstehend im Zusammenhang mit dem Abbindeverzögerer genannten Zusatzmittel beizumischen.

Derartige Bindemittelzusammensetzungen härten nach Zugabe von Wasser unter Ausbildung von Hydratphasen aus. Somit lassen sich Formkörper, durch Vermischung einer Bindemittelzusammensetzung mit Wasser und anschliessender Aushärtung herstellen. Eine mit Wasser angerührte Bindemittelzusammensetzung kann prinzipiell in beliebige Formen gegossen werden, so dass sich nahezu beliebig geformte Formkörper herstellen lassen.

Der Abbindeverzögerer eignet sich insbesondere zur Verzögerung des Abbindens von hydratbildenden Bindemitteln oder Zusammensetzungen. Dabei wird der Abbindeverzögerer vor, während und/oder nach Anmachen des hydratbildenden Bindemittels bzw. der hydratbildenden Zusammensetzung zugesetzt.

Aus den nachfolgenden Ausführungsbeispielen und der Gesamtheit der Patentansprüche ergeben sich weitere vorteilhafte Ausführungsformen und Merkmalskombinationen der Erfindung.

### Kurze Beschreibung der Zeichnung

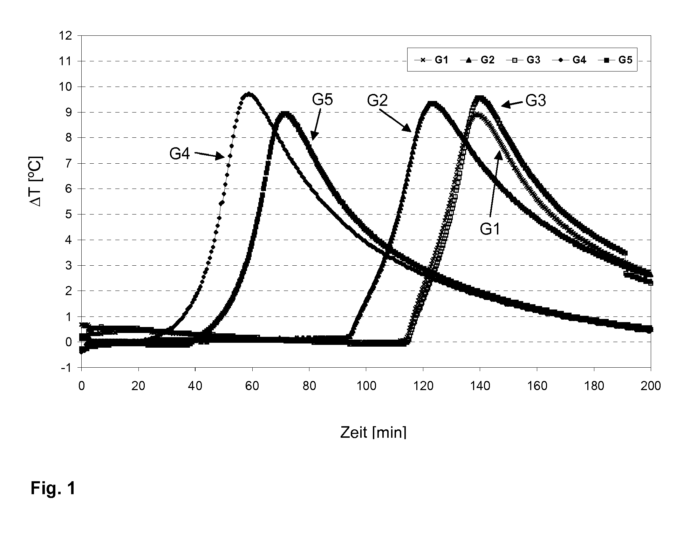

Die zur Erläuterung der Ausführungsbeispiele verwendete Fig.1 zeigt die Temperaturentwicklung von wässrigen Gipsmischungen mit verschiedenen Abbindeverzögerern als Funktion der Zeit.

### Ausführungsbeispiele

### Herstellungsbeispiel 1

In einem ersten Verfahrensschritt wurden in einem Reaktionsgefäss bei Raumtemperatur 320 g Lysin (Reaktand **A**) vorgelegt und unter Rühren 792 g Wasser zugegeben. Anschliessend wurde verdünnte Base in Form einer Lösung von 50 Gew.-% NaOH in Wasser zugegeben bis die Reaktionslösung ein pH von 10.5 erreicht hat. Die Temperatur des Gemischs wurde sodann auf ca. 45°C eingestellt.

Daraufhin wurden in einem nächsten Verfahrensschritt abwechselnd Teilmengen an Bernsteinsäureanhydrid (Reaktand C) und verdünnter Base (50 Gew.-% NaOH in Wasser) zugegeben, so dass der pH-Wert der Reaktionslösung durchwegs in einem Bereich von 8.5 - 10.5 lag. Die Temperatur während der Zugabe wurde dabei in einem Bereich von 40 - 50°C konstant gehalten. Die Gesamtmenge an zugegebenem Bernsteinsäureanhydrid betrug insgesamt 220.8 g, die Gesamtmenge an zugegebener verdünnter Base 264 g (inklusive der im ersten Verfahrenschritt zugegebenen Base). Der pH-Wert der Reaktionslösung nach erfolgter Zugabe des gesamten Bernsteinsäureanhydrids und der gesamten verdünnten Base weist einen Wert von 8 - 9 auf.

Die Reaktionslösung wurde anschliessend bei einer Temperatur von 40 - 50°C für ca. 30 min weiter gerührt und dann unter Rühren abgekühlt.

So hergestellte Lösungen können ohne weitere Aufbereitung direkt als Abbindeverzögerer in hydratbildenden Bindemitteln eingesetzt werden. Diese werden im Folgenden als Abbindeverzögerer **AE1** bezeichnet.

### Herstellungsbeispiel 2 (Vergleichsbeispiel)

Zu Vergleichszwecken wurde ein weiterer Abbindeverzögerer analog dem Herstellungsbeispiel 1 hergestellt. Im Unterscheid zum Herstellungsbeispiel 1 wurde die gesamte Menge an verdünnter Base jedoch in einer Portion direkt im ersten Verfahrensschritt zugegeben. Im zweiten Verfahrenschritt erfolgte dann entsprechend die Zugabe der gesamten Menge an Bernsteinsäureanhydrid in einer Portion. Der pH-Wert der Reaktionslösung lag zu Beginn der Umsetzung bei deutlich über 11.5 und fiel dann während der Umsetzung unter Temperaturanstieg der Reaktionslösung innert wenigen Minuten stark ab, auf einen Wert deutlich unter 7.5. Der so hergestellte Abbindeverzögerer wird im Folgenden als Abbindeverzögerer **AV** bezeichnet.

### Herstellungsbeispiel 3

In einem ersten Verfahrensschritt wurden in einem Reaktionsgefäss bei Raumtemperatur 800 g Lysin (Reaktand **A**) vorgelegt und unter Rühren 2000 g Wasser zugegeben. Anschliessend wurden 50 g Ca(OH)₂ zugegeben. Der pH Wert der Lösung liegt nach der Ca(OH)₂ Zugabe zwischen 10 und 11.5. Die Temperatur des Gemischs wurde sodann auf ca. 45°C eingestellt.

Daraufhin wurden in einem nächsten Verfahrensschritt abwechselnd Teilmengen an Bernsteinsäureanhydrid (Reaktand **C**) und verdünnter Base (50 Gew.-% NaOH in Wasser) zugegeben, so dass der pH-Wert der Reaktionslösung durchwegs in einem Bereich von 8.5 - 10.5 lag. Die Temperatur während der Zugabe wurde dabei in einem Bereich von 40 - 50°C konstant gehalten. Die Gesamtmenge an zugegebenem Bernsteinsäureanhydrid betrug insgesamt 552 g, die Gesamtmenge an zugegebener verdünnter Base 650 g. Der pH-Wert der Reaktionslösung nach erfolgter Zugabe des gesamten Bernsteinsäureanhydrids und der gesamten verdünnten Base weist einen Wert von 7 - 8 auf.

Die Reaktionslösung wurde anschliessend bei einer Temperatur von 40 - 50°C für ca. 30 min weiter gerührt und dann unter Rühren abgekühlt.

So hergestellte Lösungen können in einem Sprühtrockner zu einem Pulver umgewandelt werden, welches im Folgenden als **AE2** bezeichnet wird.

### Vergleichsversuche mit Gips

Die Wirksamkeit verschiedener Abbindeverzögerer wurde in wässrigen Gipsmischungen getestet.

Zur Herstellung der Gipsmischungen wurde jeweils Calciumsulfat-β-Halbydrat (Alabastergips Almod BCL8098) bei Raumtemperatur mit Wasser in einem Gewichtsverhältnis von Wasser zu Gips = 0.6 aufgeschlämmt und mit 0.02 Gew.-% Amylotex (ein Verdicker auf Basis von Stärkeether, z.B. erhältlich bei Aqualon) versetzt. Die Menge an Amylotex bezieht sich dabei auf das Calciumsulfat-β-Halbydrat. Dazu wurden die in der nachfolgenden Tabelle 1 angegebenen Abindeverzögerer in einer Konzentration von jeweils 0.029 Gew.-%, jeweils bezogen auf das Calciumsulfat-β-Halbydrat, gemischt. Sämtliche Gipsmischungen wurden bis auf die unterschiedlichen Abbindeverzögerer im Wesentlichen unter identischen Bedingungen hergestellt.

**Tabelle 1: Hergestellte Gipsmischungen**

| **Gipsmischung** | **Abbindeverzögerer** |
|---|---|
| **G1** | **AE1** (gemäss Herstellungsbeispiel 1) |
| **G2** | **AV** (gemäss Herstellungsbeispiel 2) |
| **G3** | **AE2** (gemäss Herstellungsbeispiel 3) |
| **G4** | Retardan L (kommerziell erhältlich bei Sika Deutschland GmbH |
| **G5** | Plast Retard L (kommerziell erhältlich bei Sicit 2000 S.p.A) |

Die Temperaturentwicklung der frisch zubereiteten Gipsmischungen **G1** - **G5** wurde anschliessend in an sich bekannter Weise als Funktion der Zeit gemessen. Fig. 1 zeigt die entsprechenden Temperaturverläufe. Die Abszissenachse gibt dabei die verstrichene Zeit ab erfolgter Herstellung der jeweiligen Gipsmischung **G1** - **G5** an, während die Ordinatenachse die Temperaturdifferenz zur Temperatur der frisch hergestellten Gipsmischung (Raumtemperatur) angibt. Sämtliche Messungen wurden im Wesentlichen unter identischen Bedingungen durchgeführt.

Aus Fig. 1 ist deutlich zu erkennen, dass die Gipsmischungen G1 und G3 mit den erfindungsgemässen Abbindeverzögerern **AE1** und **AE2** die besten Verzögerungswirkungen aufweisen. Erst nach ca. 115 min ist jeweils ein signifikanter Anstieg der Temperatur und damit der Beginn des Abbindens der jeweiligen Gipsmischung zu beobachten. Der Abbindeverzögerer **AE2** (Gipsmischung **G3**) ist dabei im Vergleich zum Abbindeverzögerer **AE1** (Gipsmischung **G1**) noch wirksamer. Die übrigen Gipszusammensetzungen **G2**, **G4** und **G5**, welche alle herkömmliche Abbindeverzögerer enthalten, vermögen den Abbindebeginn im besten Fall lediglich bis 95 min hinaus zu zögern. Damit kann durch den erfindungsgemäss hergestellten Abbindeverzögerer gegenüber bekannten Verzögerern eine Verlängerung der Verarbeitungszeit von wenigstens 20 % erreicht werden.

Die vorstehend beschriebenen Ausführungsbeispiele sind nur als illustrative Beispiele zu verstehen, welche im Rahmen der Erfindung beliebig abgewandelt werden können.

So ist es zum Beispiel möglich, anstelle oder zusätzlich zu Lysin eine andere Aminosäuren und/oder Aminosäurenderivate einzusetzen, wie z.B. Threonin. Ebenso kann anstelle oder zusätzlich zu Bernsteinsäureanhydrid prinzipiell eine anderes Carbonsäurederivat und/oder eine Carbonsäure eingesetzt werden. Auch können die Abbindeverzögerer beispielsweise in anderen hydratbildenden Bindemitteln als Gips eingesetzt werden.

Zudem kann es vorteilhaft sein, den erfindungsgemässen Abbindeverzögerern Zusatzmittel beizumischen, insbesondere Konservierungsmittel. Dem Fachmann sind entsprechende Substanzen an sich bekannt.

## Patentansprüche

1. Verfahren zur Herstellung eines Abbindeverzögerers für hydratbildende Bindemittel, wobei
a) ein erster Reaktand **A**, umfassend eine Aminosäuren und/oder ein Aminosäurederivat, mit
b) einem zweiten Reaktanden **C**, umfassend eine Aminfreie Carbonsäure und/oder ein Aminfreies Carbonsäurederivat,
zu einem Reaktionsprodukt umgesetzt wird, **dadurch gekennzeichnet, dass** die Umsetzung bei einem pH-Wert von 7.5 - 11.5, bevorzugt 8 - 11, insbesondere 8.5 - 10.5, erfolgt.

2. Verfahren nach Anspruch 1, **dadurch gekennzeichnet, dass** die Aminosäure Lysin und/oder Threonin, insbesondere Lysin, ist.

3. Verfahren nach einem der vorangehenden Ansprüche, **dadurch gekennzeichnet, dass** Reaktand **C** ein Aminfreies Carbonsäurederivat, insbesondere ein Carbonsäureanhydrid, umfasst.

4. Verfahren nach Anspruch 3, **dadurch gekennzeichnet, dass** das Carbonsäureanhydrid Bernsteinsäureanhydrid ist.

5. Verfahren nach einem der vorangehenden Ansprüche, **dadurch gekennzeichnet, dass** die Reaktanden **A** und C zu einem Amid, insbesondere einem Diamid, umgesetzt werden.

6. Verfahren nach einem der vorangehenden Ansprüche, **dadurch gekennzeichnet, dass** die Umsetzung bei einer Temperatur von 20 - 60°C, bevorzugt 35 - 55°C, besonders bevorzugt 40 - 50°C, erfolgt.

7. Verfahren nach einem der vorangehenden Ansprüche, **dadurch gekennzeichnet, dass** dem Reaktionsgemisch mindestens eine Base zugegeben wird.

8. Verfahren nach Anspruch 7, **dadurch gekennzeichnet, dass** die Base ein oder mehrere Alkalihydroxide, Erdalkalihydroxide und/oder Erdalkalioxide umfasst, wobei die Base insbesondere NaOH, KOH, CaO und/oder Ca(OH)₂ umfasst und insbesondere in Form einer wässrigen Lösung zugegeben wird.

9. Verfahren nach einem der Ansprüche 7 - 8, **dadurch gekennzeichnet, dass** in einem ersten Verfahrensschritt eine wässrige Lösung von Reaktand **A** vorgelegt und durch Zugabe von Base ein pH von 7.5 - 11.5, bevorzugt 8 - 11, insbesondere 8.5 - 10.5, eingestellt wird.

10. Verfahren nach einem der Ansprüche 7 - 9, **dadurch gekennzeichnet, dass** in einem weiteren Verfahrensschritt alternierend Teilmengen der Base und Teilmengen des Reaktanden **C** zugegeben werden und dass in einem optionalen nachfolgenden Verfahrensschritt eine Trocknung des Reaktionsgemisches, insbesondere eine Sprühtrocknung, erfolgt.

11. Verfahren zur Herstellung einer hydratbildenen
Bindemittelzusammensetzung, wobei ein Abbindeverzögerer nach einem der Ansprüche 1 - 10 hergestellt und mit einem hydratbildenen Bindemittel, insbesondere Gips, vermischt wird.

12. Abbindeverzögerer, insbesondere für hydratbildene Bindemittel, erhältlich durch ein Verfahren nach einem der Ansprüche 1 - 10, wobei insbesondere der Abbindeverzögerer in flüssiger oder fester Form, Im Besonderen als Pulver, vorliegt.

13. Bindemittelzusammensetzung enthaltend einen Abbindeverzögerer nach Anspruch 12 sowie ein hydratbildenes Bindemittel, insbesondere Gips.

14. Formkörper, erhältlich durch Vermischung einer Bindemittelzusammensetzung nach Anspruch 13 mit Wasser und anschliessender Aushärtung.

15. Verwendung eines Abbindeverzögerers nach Anspruch 12 zur zeitlichen Verzögerung des Abbindebeginns von hydratbildenen Bindemitteln, insbesondere von Gips.
